# EUROPEAN PATENT APPLICATION

(11) **EP 2 684 651 A2**
(43) Date of publication of application: **15.01.2014**
(21) Application number: 13175706.4
(22) Date of filing: 09.07.2013
(51) Int. Cl.: B25J 9/16

(54) **Robot system, robot, robot control device, robot control method, and robot control program**

(30) Priority: 11.07.2012 JP 2012155252
(71) Applicant: Seiko Epson Corporation, Tokyo 163 (JP)
(72) Inventor: Matsumoto, Shigeyuki, Nagano, 392-8502 (JP)
(74) Representative: HOFFMANN EITLE

(57) **Abstract**

A robot system (10) includes: a camera (14) that captures an image of a movable unit (20) to create a camera image; a storage unit (22) that stores a shape model (30) of the movable unit (20) ; a matching processing unit (152) that detects, based on matching between the camera image and the shape model (30), position and orientation of the movable unit (20) in a camera coordinate system; a control information acquisition unit (150) that acquires information of position and orientation of the movable unit (20) in a robot coordinate system recognized by a motion control unit that controls motion of the movable unit (20); and a coordinate system calibration unit that reconciles the camera coordinate system and the robot coordinate system based on the position and orientation of the movable unit (20) in the camera coordinate system and the position and orientation of the movable unit (20) in the robot coordinate system.

## Description

### BACKGROUND

### 1. Technical Field

The present invention relates to a robot system, a robot, a robot control device, a robot control method, and a robot control program.

### 2. Related Art

JP-A-10-340112 discloses a robot hand that is caused to hold a measurement piece and, based on an image captured of the measurement piece held by the robot hand, coordinate alignment between a robot body and a camera is performed.

In the technique of JP-A-10-340112, however, when the coordinate alignment (calibration) between the robot body and the camera is performed, the operation to cause the robot to hold the measurement piece is needed. Therefore, the operation requires additional time for the calibration. Moreover, since the measurement piece, which is a special jig is used, the cost to make the jig is also needed.

### SUMMARY

It is the object underlying the invention is to perform calibration more rapidly at a low cost.

A first aspect of the invention is directed to a robot system including the features of claim 1.

With this configuration, calibration can be executed more rapidly at a low cost.

In the robot system, the matching processing unit may generate a two-dimensional image of the movable unit from the shape model in three dimensions, and detect position and orientation of the movable unit in the camera image using the generated two-dimensional image.

With this configuration, based on the three-dimensional shape model of the movable unit, the position and orientation of the movable unit in the camera image can be reliably detected. Moreover, even when a plurality of cameras are not used, calibration can be executed using an image from one camera.

In the robot system, the shape model may be CAD (computer aided design) data of the movable unit. With this configuration, the position and orientation of the movable unit can be detected with high accuracy. Moreover, since data that has been already created at a design phase of the robot system can also be used, the cost required to create data of the shape model for calibration can be saved.

In the robot system, the movable unit may be an arm, a link of an arm, or an end effector. With this configuration, calibration can be reliably executed.

In the robot system, the storage unit may store shape models of a plurality of different movable units (20), the matching processing unit may detect, using at least any of the shape models of the plurality of movable units (20), position and orientation of the movable unit in the camera coordinate system, and the coordinate system calibration unit may reconcile the camera coordinate system and the robot coordinate system for the movable unit whose position and orientation in the camera coordinate system are detected by the matching processing unit.

With this configuration, if a movable unit whose image can be captured from a position where the camera is installed is present, even when another movable unit is located at a position that the camera cannot capture an image, calibration can be executed.

In the robot system, different identification information may be provided on a surface of each of the movable units (20), and the matching processing unit may detect the identification information in the camera image and detect, using the shape model of the movable unit corresponding to the detected identification information, the position and orientation of the movable unit in the camera coordinate system.

With this configuration, among the plurality of shape models, the shape model of the movable unit to be a matching object can be narrowed down. Therefore, calibration can be completed more rapidly.

In the robot system, it is preferable that the storage unit stores, among the movable units (20) in the robot system, a shape model of the movable unit whose displacement in motion is large. With this configuration, calibration accuracy can be enhanced.

A second aspect of the invention is directed to a robot including the features of claim 7.

A third aspect of the invention is directed to a robot control device as claimed in claim 8.

A fourth aspect of the invention is directed to a robot control method including the steps recited in claim 9.

A fifth aspect of the invention is directed to a robot control program as recited in claim 10.

### BRIEF DESCRIPTION OF THE DRAWINGS

The invention will be described with reference to the accompanying drawings, wherein like numbers reference like elements.

Fig. 1 shows an example of an external appearance of a robot system in an embodiment of the invention.

Fig. 2 is a block diagram showing an example of a functional configuration of the robot system.

Fig. 3 shows an example of a shape model stored in a storage unit.

Fig. 4 shows an example of a camera image created by a camera.

Fig. 5 shows examples of two-dimensional images created from the shape model.

Fig. 6 is a conceptual view for describing matching processing.

Fig. 7 is a flowchart showing an example of operation of a robot control device.

Fig. 8 is a flowchart showing an example of the matching processing (Step S200).

Fig. 9 shows an example of a computer that realizes functions of the robot control device.

### DESCRIPTION OF EXEMPLARY EMBODIMENTS

Hereinafter, an embodiment of the invention will be described with reference to the drawings.

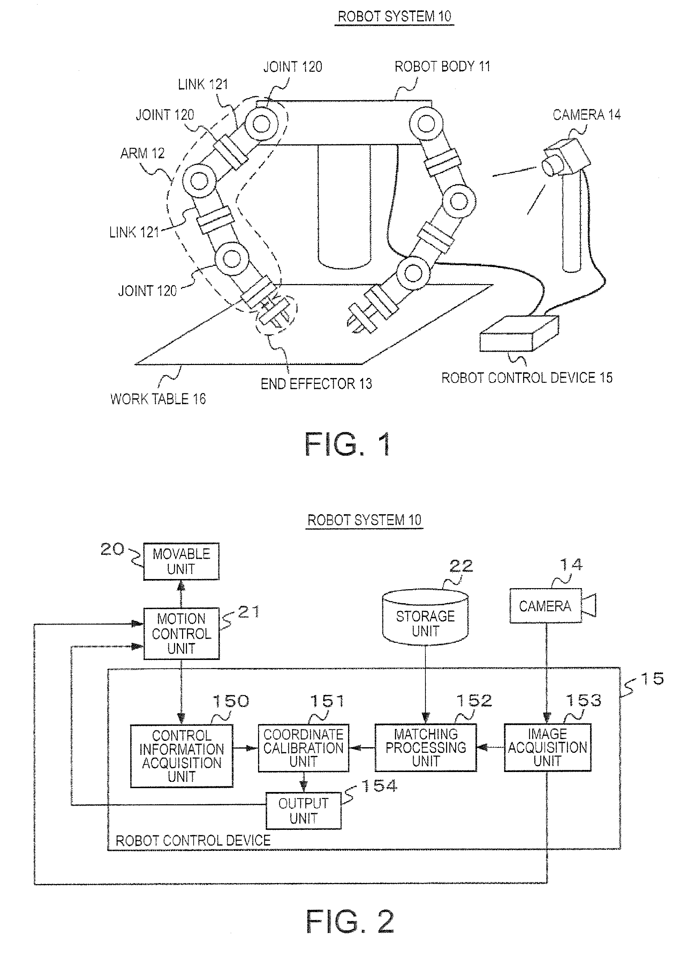

Fig. 1 shows an example of an external appearance of a robot system 10 in the embodiment of the invention. The robot system 10 includes a robot body 11, a camera 14, and a robot control device 15.

In the embodiment, two arms 12 are attached to the robot body 11. An end effector 13 such as a hand is attached to the tip end of each of the arms 12. Each of the arms 12 has a plurality of joints 120 and a plurality of links 121.

Each of the joints 120 rotatably (but rotatably within a given movable range) couples the robot body 11 with the link 121, the links 121 together, or the link 121 with the end effector 13. Each of the joints 120 is, for example, a rotary joint, which is disposed so as to be able to change an angle between the links 121 or to axially rotate the link 121.

The robot body 11 can drive the joints 120 in conjunction with each other to thereby freely (but within a given movable range) move the end effector 13 and direct the end effector 13 in a desired direction. In the example shown in Fig. 1, each of the arms 12 is a six-axis arm with six joints 120.

Moreover, when control information is requested from the robot control device 15, the robot body 11 sends to the robot control device 15, with regard to a predetermined one of the end effectors 13, information regarding the position and orientation of the end effector 13 in a robot coordinate system recognized by the robot body 11. The position and orientation of the end effector 13 can also be referred to as a posture in a relative positional relation between the end effector 13 and the other parts of the robot. It is safe to say that a change in the position and orientation of the end effector 13 is a change in the posture of the end effector 13.

In this case, when the end effector 13 is one that changes in shape like a hand, the robot body 11 controls the end effector 13 so as to have a predetermined shape (for example, an opened state), and sends information of the position and orientation of the end effector 13 at that time to the robot control device 15.

The camera 14 captures an image of the end effector 13 to create a camera image and sends the created camera image to the robot control device 15. A user adjusts the orientation of the camera 14 so that the predetermined one of the end effectors 13 is shown in the camera image captured by the camera 14.

The robot control device 15 acquires, in calibration, the information of the position and orientation of the end effector 13 from the robot body 11, and acquires a camera image at that time from the camera 14. Then, the robot control device 15 specifies the position and orientation of the end effector 13 in a camera coordinate system projected onto the camera image.

Then, based on the information of the position and orientation of the end effector 13 in the robot coordinate system recognized by the robot body 11 and the information of the position and orientation of the end effector 13 in the camera coordinate system, the robot control device 15 reconciles the two coordinate systems and outputs, as a calibration parameter, information that indicates the correspondence to the robot body 11.

In actual operation after the completion of calibration, the robot body 11 acquires the camera image captured by the camera 14 and recognizes a predetermined target point in the image. Then, the robot body 11 calculates the control amount of the arm 12 by which the position and orientation of the predetermined end effector 13 are achieved with respect to the recognized target point, using the calibration parameter received from the robot control device 15. Then, the robot body 11 controls the arm 12 in accordance with the calculated control amount to thereby execute given work.

Fig. 2 is a block diagram showing an example of a functional configuration of the robot system 10. In Fig. 2, a movable unit 20 is a part of the robot, the part being changeable in position and orientation, and functionally represents the arm 12, the link 121, the end effector 13, or the like. Moreover, a motion control unit 21 represents a function in the robot body 11.

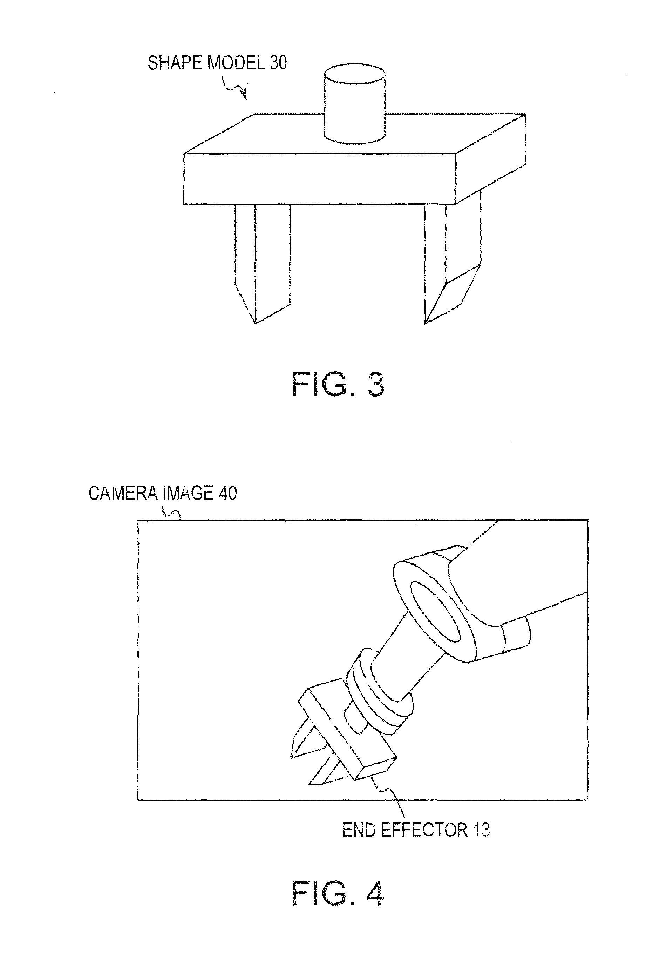

In a storage unit 22, as shown in Fig. 3 for example, data of a three-dimensional shape model 30 of the movable unit 20 is stored. In the embodiment, the shape model 30 of the end effector 13 is stored in the storage unit 22.

Moreover, in the embodiment, the shape model 30 is, for example, three-dimensional CAD data. Since the CAD data of the end effector 13 is data that has been already created in designing the robot system 10, there is no need to re-create data for calibration. Therefore, the cost and effort for performing calibration can be reduced.

For performing calibration in the embodiment, it is sufficient that the shape model 30 is data including information of a three-dimensional external appearance shape and the dimensions thereof. When such data is used as the shape model 30, CAD data including information of an internal shape and the like does not necessarily have to be used.

Moreover, information of a camera parameter such as the focal length of the camera 14 is previously stored in the storage unit 22. In the embodiment, the storage unit 22 is disposed outside the robot control device 15 and connected to the robot control device 15 via a communication cable.

The robot control device 15 has a control information acquisition unit 150, a coordinate system calibration unit 151, a matching processing unit 152, an image acquisition unit 153, and an output unit 154.

The control information acquisition unit 150 acquires, from the motion control unit 21, information of the position and orientation of the end effector 13 in the robot coordinate system recognized by the motion control unit 21, and sends the information to the coordinate system calibration unit 151.

The image acquisition unit 153 acquires a camera image from the camera 14 and sends the image to the matching processing unit 152. In a camera image 40 received from the camera 14, the end effector 13 is shown as shown in Fig. 4 for example.

When the matching processing unit 152 receives the camera image from the image acquisition unit 153, the matching processing unit 152 acquires, from the storage unit 22, the data of the shape model 30 of the end effector 13 and the camera parameter.

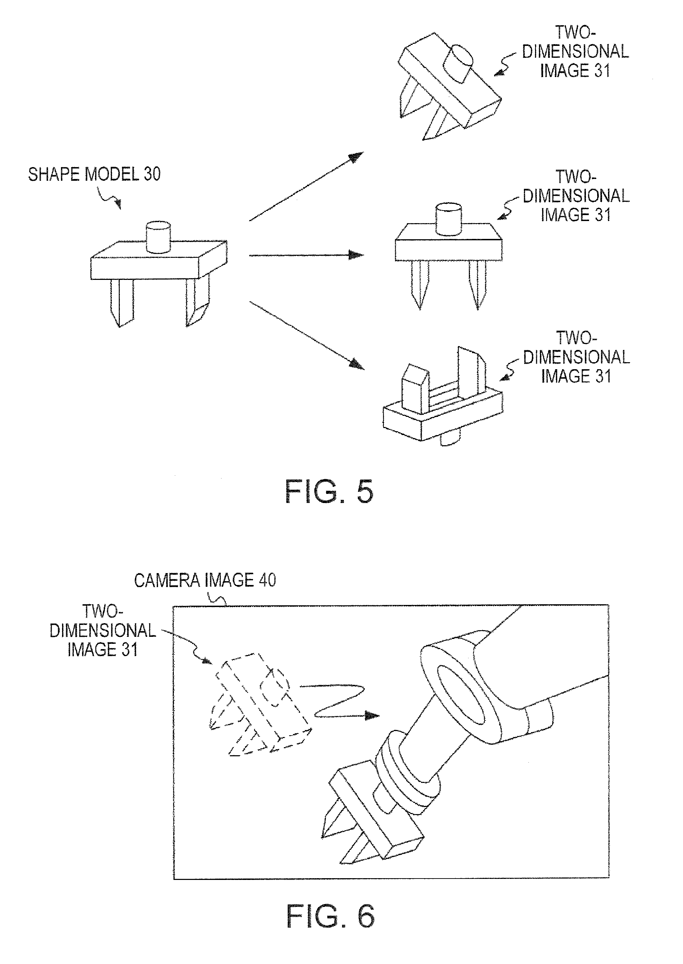

Then, the matching processing unit 152 creates, as shown in Fig. 5 for example, two-dimensional images 31 of the three-dimensional shape model 30 as viewed from various directions. The two-dimensional images 31 shown in Fig. 5 are illustrative only. Actually, a two-dimensional image of the shape model 30 as viewed from a different direction than those may be created.

Then, the matching processing unit 152 scans, over the camera image 40, each of the created two-dimensional images 31 while changing the orientation or size thereof on the camera image 40 as shown in Fig. 6 for example, to search for the orientation and size of the two-dimensional image 31 whose degree of similarity to the camera image 40 is a given value or more.

A connecting portion of each component with another component is often not seen from the camera 14 in a state where the components are assembled as a robot. Therefore, the matching processing unit 152 excludes a portion not seen from the camera 14, such as the connecting portion, in the two-dimensional image 31 from a calculation object of the degree of similarity.

When the orientation and size of the two-dimensional image 31 having a degree of similarity of a given value or more are found, the matching processing unit 152 calculates, based on the size and orientation of the two-dimensional image 31 on the camera image 40, the position and orientation of the end effector 13 in the camera coordinate system, and sends information of the calculated position and orientation to the coordinate system calibration unit 151.

Here, the distance from the camera 14 to the end effector 13 is proportional to the size of the end effector 13 on the camera image 40 and the focal length of the camera 14. The matching processing unit 152 previously has the dimensions of the three-dimensional shape model 30 of the end effector 13 and the focal length of the camera 14, and therefore can calculate the distance from the camera 14 to the end effector 13 in the camera coordinate system.

Moreover, in the embodiment, the shape model stored in the storage unit 22 is the three-dimensional CAD data of the end effector 13. Therefore, with the use of the CAD data, the matching processing unit 152 can calculate with high accuracy the distance from the camera 14 to the end effector 13 in the camera coordinate system.

The coordinate system calibration unit 151 reconciles the camera coordinate system and the robot coordinate system based on the information of the position and orientation of the end effector 13 in the robot coordinate system received from the control information acquisition unit 150 and the information of the position and orientation of the end effector 13 in the camera coordinate system received from the matching processing unit 152. Then, the coordinate system calibration unit 151 sends a calibration parameter including information that indicates the correspondence to the output unit 154.

For example, the coordinate system calibration unit 151 obtains a rotation matrix and a translation vector between the camera coordinate system and the robot coordinate system using coordinates of a given number of points corresponding to those on the end effector 13 in each of the camera coordinate system and the robot coordinate system, to thereby reconcile the camera coordinate system and the robot coordinate system. Then, the coordinate system calibration unit 151 sends a calibration parameter including information of the obtained rotation matrix and translation vector to the output unit 154.

The output unit 154 outputs the calibration parameter received from the coordinate system calibration unit 151 to the motion control unit 21.

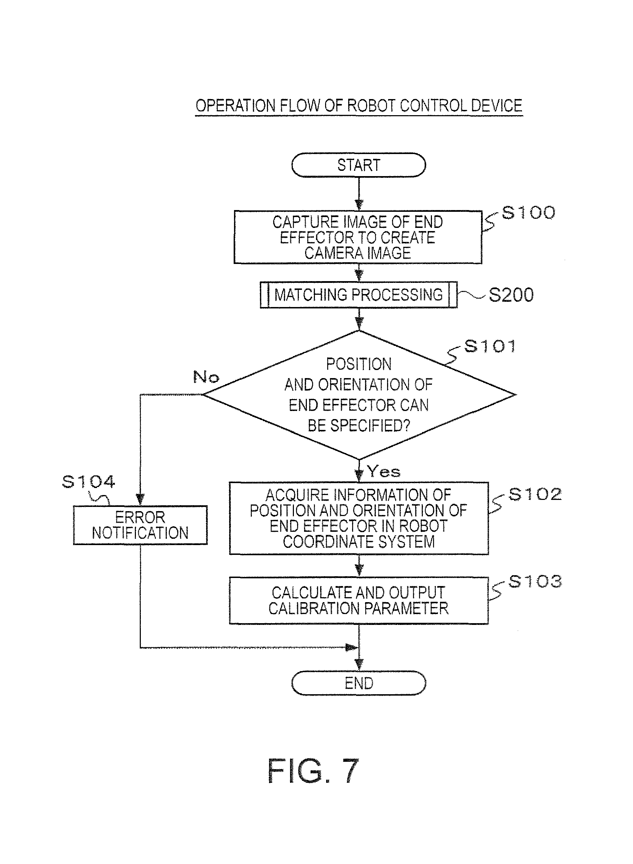

Fig. 7 shows a flowchart showing an example of operation of the robot control device 15. For example, after the installation of the robot system 10, the robot control device 15 accepts an instruction of calibration from a user, whereby the robot system 10 starts the operation shown in the flowchart.

First, the image acquisition unit 153 instructs the camera 14 to capture an image of the end effector 13. The camera 14 captures an image of the end effector 13 to create a camera image, and sends the created camera image to the robot control device 15 (Step S100). The image acquisition unit 153 receives the camera image from the camera 14 and sends the image to the matching processing unit 152.

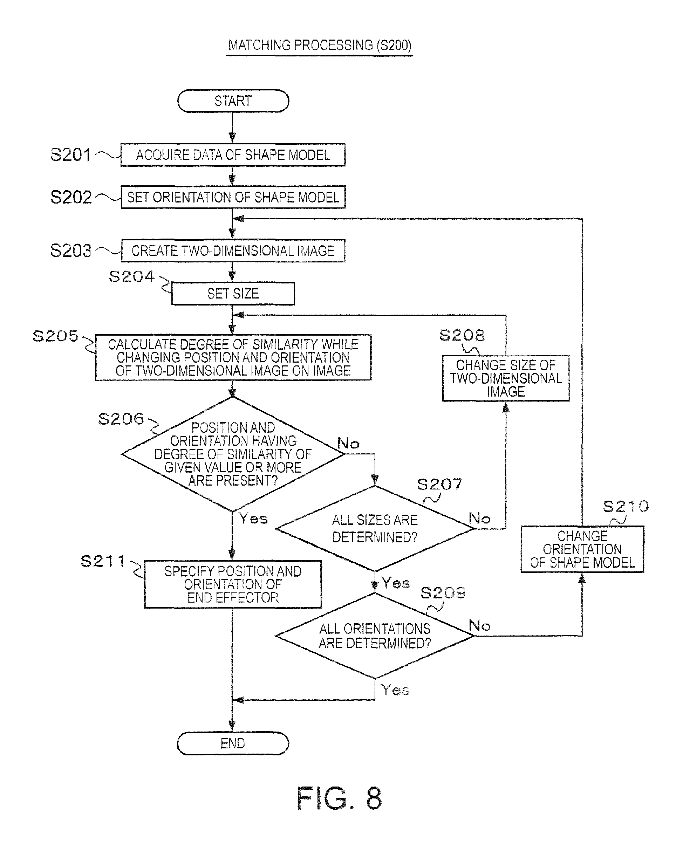

Next, the matching processing unit 152 executes the matching processing shown in Fig. 8 (Step S200). Fig. 8 is a flowchart showing an example of the matching processing (Step S200).

The matching processing unit 152 acquires, from the storage unit 22, data of the shape model of the end effector 13 and a camera parameter (Step S201). Then, the matching processing unit 152 sets, as an initial value, the orientation of the shape model of the end effector 13 as viewed from the camera 14 (Step S202).

Next, the matching processing unit 152 creates a two-dimensional image of the end effector 13 viewed from the camera 14 in the set orientation (Step S203). Then, the matching processing unit 152 sets, as an initial value, the size of the created two-dimensional image on the camera image received from the image acquisition unit 153 (Step S204).

Next, the matching processing unit 152 scans, over the camera image, the two-dimensional image of the set size while changing the position or orientation thereof on the camera image, and calculates the degree of similarity between the two-dimensional image of the end effector 13 and the camera image (Step S205). Then, the matching processing unit 152 determines whether or not the position and orientation having a degree of similarity of a given value or more are present (Step S206).

Here, for example, the matching processing unit 152 calculates the degree of similarity first by roughly changing the position and orientation every several pixels with regard to the position and every several degrees with regard to the orientation. It is preferable that if the position and orientation having a degree of similarity of a given value or more are not present, the matching processing unit 152 calculates, for the combination of position and orientation having the highest degree of similarity, the degree of similarity by finely changing the position and orientation pixel by pixel and degree by degree.

If the position and orientation having a degree of similarity of a given value or more are present (Step S206: Yes), the matching processing unit 152 specifies, based on the two-dimensional image and the size thereof at that time and the position and orientation thereof at that time, the position and orientation of the end effector 13 in the camera coordinate system (Step S211). Then, the matching processing unit 152 sends information of the specified position and orientation to the coordinate system calibration unit 151, and ends the matching processing (Step S200) shown in the flowchart.

If the position and orientation having a degree of similarity of a given value or more are not present (Step S206: No), the matching processing unit 152 determines whether or not all of size patterns are determined (Step S207). If all of the size patterns are not determined (Step S207: No), the matching processing unit 152 changes the size of the two-dimensional image (Step S208), and again executes the processing shown in Step S205.

Here, for example, the matching processing unit 152 executes Step S205 and Step S206 first by roughly changing the size for some different size patterns having a large difference in size. Then, it is preferable that if the combination of position and orientation having a degree of similarity of a given value or more cannot be detected, the matching processing unit 152 executes Step S205 and Step S206 by finely changing the size for some different size patterns having a small difference in size in the vicinity of the size where the highest degree of similarity is detected.

If all of the size patterns are determined (Step S207: Yes), the matching processing unit 152 determines whether or not all of orientation patterns are determined (Step S209). If all of the orientation patterns are not determined (Step S209: No), the matching processing unit 152 changes the orientation of the shape model of the end effector 13 as viewed from the camera 14 (Step S210), and again executes the processing shown in Step S203.

Here, for example, the matching processing unit 152 executes Step S205 to Step S208 first by roughly changing the angle for some different angle patterns having a large difference in angle. Then, it is preferable that if the combination of position and orientation having a degree of similarity of a given value or more cannot be detected, the matching processing unit 152 executes Step S203 to Step S208 by finely changing the angle of the shape model for some different angle patterns having a small difference in angle in the vicinity of the angle where the highest degree of similarity is detected.

If all of the orientation patters are determined (Step S209: Yes), the matching processing unit 152 notifies the coordinate system calibration unit 151 that the position and orientation of the end effector 13 cannot be specified, and ends the matching processing (Step S200) shown in the flowchart.

Returning to Fig. 7, the description will be continued. The coordinate system calibration unit 151 determines whether or not the position and orientation of the end effector 13 in the camera coordinate system can be specified in Step S200 (Step S101). If the position and orientation of the end effector 13 cannot be specified (Step S101: No), the coordinate system calibration unit 151 notifies an error of the user via a display device or the like, and the robot control device 15 ends the operation shown in the flowchart.

On the other hand, if the position and orientation of the end effector 13 can be specified (Step S101: Yes), the control information acquisition unit 150 acquires, from the motion control unit 21, information of the position and orientation of the end effector 13 in the robot coordinate system recognized by the motion control unit 21, and sends the information to the coordinate system calibration unit 151 (Step S102).

Next, the coordinate system calibration unit 151 reconciles the camera coordinate system and the robot coordinate system based on the information of the position and orientation of the end effector 13 in the robot coordinate system received from the control information acquisition unit 150 and the information of the position and orientation of the end effector 13 in the camera coordinate system received from the matching processing unit 152.

Then, the coordinate system calibration unit 151 sends to the output unit 154 a calibration parameter including information that indicates the correspondence. The output unit 154 outputs the calibration parameter received from the coordinate system calibration unit 151 to the motion control unit 21 (Step S103), and the robot control device 15 ends the operation shown in the flowchart.

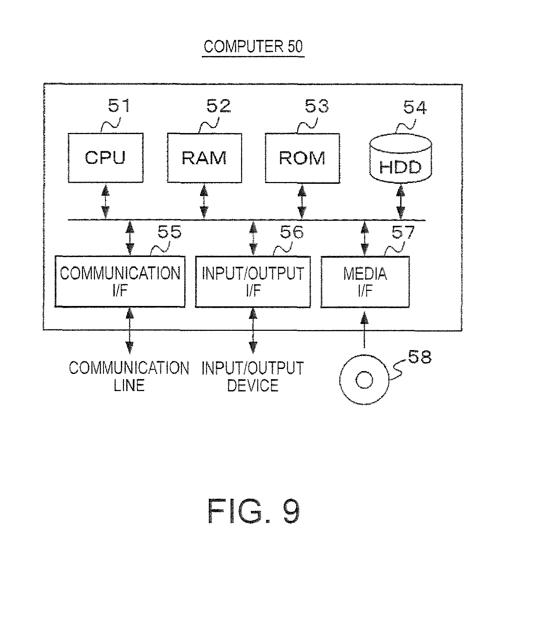

Fig. 9 shows an example of a hardware configuration of a computer 50 that realizes the functions of the robot control device 15.

The computer 50 includes a CPU (Central Processing Unit) 51, a RAM (Random Access Memory) 52, a ROM (Read Only Memory) 53, an HDD (Hard Disk Drive) 54, a communication interface (I/F) 55, an input/output interface (I/F) 56, and a media interface (I/F) 57.

The CPU 51 operates based on programs stored in the ROM 53 or the HDD 54 and controls the portions. The ROM 53 stores a boot program executed by the CPU 51 at the startup of the computer 50, a program dependent on hardware of the computer 50, and the like.

The HDD 54 stores programs executed by the CPU 51 and data or the like used by the programs. The communication interface 55 receives data from another device via a communication line, sends the data to the CPU 51, and transmits data created by the CPU 51 to the device via the communication line.

The CPU 51 acquires data from an input/output device such as a keyboard or a mouse via the input/output interface 56. Moreover, the CPU 51 outputs created data to an input/output device such as a display device or a printing device via the input/output interface 56.

The media interface 57 reads programs or data stored in a storage medium 58 and provides the programs or data to the CPU 51 via the RAM 52. The CPU 51 loads the programs or data from the storage medium 58 onto the RAM 52 via the media interface 57, and executes the loaded programs. The storage medium 58 is, for example, an optical recording medium such as a DVD (Digital Versatile Disc) or a PD (Phase change rewritable Disk), a magneto-optical recording medium such as an MO (Magneto-Optical disk), a tape medium, a magnetic recording medium, a semiconductor memory, or the like.

The CPU 51 of the computer 50 executes the programs loaded onto the RAM 52 to thereby realize the functions of the control information acquisition unit 150, the coordinate system calibration unit 151, the matching processing unit 152, the image acquisition unit 153, and the output unit 154.

The CPU 51 of the computer 50 reads these programs from the storage medium 58 and executes them. As another example, the CPU 51 may acquire these programs from another device via a communication line.

The embodiment of the invention has been described above.

As is apparent from the above description, according to the robot system 10 of the embodiment, calibration can be executed more rapidly at a low cost.

The invention is not limited to the embodiment described above and includes various modified examples.

For example, in the embodiment described above, the robot control device 15 performs calibration based on the position and orientation of the end effector 13. However, the invention is not limited thereto. The robot control device 15 may perform calibration based on the position and orientation of the link or joint in the arm, the entire arm, or the like as long as it is a portion that is movable in the robot. In this case, the shape model of the link or joint, the entire arm, or the like is stored in the storage unit 22.

However, the movable unit to be an object of calibration is preferably a part having a large displacement. For example, it is preferable to perform calibration based on the position and orientation, not of the arm, but of the end effector attached to the tip end of the arm. It is preferable, in the case of the link or joint in the arm, to perform calibration based on the position and orientation of the link or joint, which is not close to the robot body but rather close to the end effector. With this configuration, calibration accuracy can be enhanced.

Moreover, when calibration is performed based on the position and orientation of the entire arm, the shape of the entire arm is changed by a rotation angle at the joint, and therefore, for performing calibration, it is preferable to perform calibration after making the shape of the entire arm into a predetermined shape by, for example, setting the angles of all of the joints to a predetermined angle (for example, 0 degree). With this configuration, one shape model can be used as the entire arm, so that it is possible to prevent the time required for calibration from lengthening due to the selection of shape models.

Moreover, in the embodiment described above, the matching processing unit 152 scans, over the enter camera image captured by the camera 14, the two-dimensional image created from the shape model of the end effector 13 in the storage unit 22 to calculate the degree of similarity. However, the invention is not limited thereto.

For example, identification information such as a mark may be provided on a surface of an real end effector 13, and the matching processing unit 152 may detect through image recognition the identification information in the camera image captured by the camera 14 and scan preferentially the vicinity of the detected identification information in the camera image to calculate the degree of similarity. With this configuration, the position and orientation of the movable unit in the camera coordinate system can be specified more rapidly.

Identification information may also be provided on a surface of the shape model of the movable unit. In that case, based on an appearance of the identification information on the camera image, a direction in which the identification information provides such an appearance is specified, and a two-dimensional image viewed from the specified direction is created from the shape model, whereby the position and orientation of the movable unit in the camera coordinate system can be specified more rapidly.

Moreover, in the embodiment described above, calibration is performed based on the position and orientation only of the end effector as the movable unit. However, the invention is not limited thereto. Some shape models of a plurality of different movable units (20) (for example, different links, different joints, or the like, in addition to the end effector) may be stored in the storage unit 22, and calibration may be performed using, among them, the shape model whose position and orientation can be specified in a camera image.

With this configuration, if the movable unit whose image can be captured from a position where the camera 14 is installed is present, even when another movable unit is located at a position that the camera 14 cannot capture an image, calibration can be performed. Therefore, for performing calibration, there is no need for the robot to take a given posture, so that calibration can be started more rapidly. Moreover, during practical operation, calibration can be executed at any time using a part caught by the camera 14.

Moreover, in this case, different identification information may be reconciled with the respective shape models, identification information may also be provided on surfaces of the corresponding real movable units (20), and the matching processing unit 152 may detect through image recognition the identification information in the camera image captured by the camera 14 and specify the position and orientation of the movable unit on the camera image using the shape model corresponding to the detected identification information. With this configuration, even when a plurality of shape models are present, calibration can be rapidly performed.

Moreover, in Fig. 1, a device having the functions of the movable unit 20, the motion control unit 21, and the robot control device 15, or a device further having the storage unit 22 may be configured as a robot. Moreover, the motion control unit 21 may be included in the robot control device.

Although the invention has been described above using the embodiment, the technical range of the invention is not limited to the range described in the embodiment. It will be apparent to those skilled in the art that various modifications or improvements can be effected within the scope of the invention as defined by the appended claims.

## Claims

1. A robot system (10) comprising:
a movable unit (20) that is changeable in position and orientation;
a camera (14) that captures an image of the movable unit (20) to create a camera image;
a storage unit (22) that stores a shape model (30) of the movable unit (20);
a matching processing unit (152) that detects, based on matching between the camera image and the shape model (30), position and orientation of the movable unit (20) in a camera coordinate system;
a control information acquisition unit (150) that acquires information of position and orientation of the movable unit (20) in a robot coordinate system recognized by a motion control unit that controls motion of the movable unit (20); and
a coordinate system calibration unit (151) that reconciles the camera coordinate system and the robot coordinate system based on the position and orientation of the movable unit (20) in the camera coordinate system and the position and orientation of the movable unit (20) in the robot coordinate system.

2. The robot system (10) according to claim 1, wherein the matching processing unit (152) generates a two-dimensional image of the movable unit (20) from the shape model (30) in three dimensions, and detects position and orientation of the movable unit (20) in the camera image using the generated two-dimensional image.

3. The robot system (10) according to claim 1 or 2, wherein the shape model (30) is three-dimensional computer aided design data of the movable unit (20).

4. The robot system (10) according to any one of claims 1 to 3, wherein the movable unit (20) is an arm (12), a link of an arm (121), or an end effector (13).

5. The robot system (10) according to any one of the preceding claims, wherein
the storage unit (22) stores shape models (30) of a plurality of different movable units (20),
the matching processing unit (152) detects, using at least one of the shape models (30) of the plurality of movable units (20), position and orientation of the movable unit (20) in the camera coordinate system, and
the coordinate system calibration unit (151) reconciles the camera coordinate system and the robot coordinate system for the movable unit (20) whose position and orientation in the camera coordinate system are detected by the matching processing unit (152).

6. The robot system (10) according to claim 5, wherein
different identification information is provided on a surface of each of the movable units (20), and
the matching processing unit (152) detects the identification information in the camera image and detects, using the shape model (30) of the movable unit (20) corresponding to the detected identification information, the position and orientation of the movable unit (20) in the camera coordinate system.

7. A robot comprising:
a movable unit (20) that is changeable in position and orientation;
an image acquisition unit that acquires a camera image captured of the movable unit (20);
a storage unit (22) that stores a shape model (30) of the movable unit (20);
a matching processing unit (152) that detects, based on matching between the camera image and the shape model (30), position and orientation of the movable unit (20) in a camera coordinate system;
a motion control unit that controls motion of the movable unit (20);
a control information acquisition unit (150) that acquires information of position and orientation of the movable unit (20) in a robot coordinate system recognized by the motion control unit; and
a coordinate system calibration unit (151) that reconciles the camera coordinate system and the robot coordinate system, based on the position and orientation of the movable unit (20) in the camera coordinate system and the position and orientation of the movable unit (20) in the robot coordinate system, to generate a calibration parameter, wherein
the motion control unit controls motion of the movable unit (20) based on the generated calibration parameter.

8. A robot control device (15) that controls a robot, comprising:
an image acquisition unit (153) that acquires a camera image captured of a movable unit (20) of the robot, the movable unit (20) being changeable in position and orientation;
a control information acquisition unit (150) that acquires information of position and orientation of the movable unit (20) in a robot coordinate system recognized by a motion control unit that controls motion of the movable unit (20);
a matching processing unit (152) that acquires a shape model (30) of the movable unit (20) and detects, based on matching between the camera image and the shape model (30), position and orientation of the movable unit (20) in a camera coordinate system;
a coordinate system calibration unit (151) that reconciles the camera coordinate system and the robot coordinate system, based on the position and orientation of the movable unit (20) in the camera coordinate system and the position and orientation of the movable unit (20) in the robot coordinate system, to generate a calibration parameter; and
an output unit (154) that outputs the calibration parameter to the motion control unit.

9. A robot control method comprising:
acquiring a camera image of a movable unit (20) of a robot, the movable unit (20) being changeable in position and orientation;
acquiring information of position and orientation of the movable unit (20) in a robot coordinate system recognized by a motion control unit that controls motion of the movable unit (20);
acquiring a shape model (30) of the movable unit (20) and detecting, based on matching between the camera image and the shape model (30), position and orientation of the movable unit (20) in a camera coordinate system;
reconciling the camera coordinate system and the robot coordinate system, based on the position and orientation of the movable unit (20) in the camera coordinate system and the position and orientation of the movable unit (20) in the robot coordinate system, to generate a calibration parameter; and
outputting the calibration parameter to the motion control unit.

10. A robot control program that controls a robot, causing a computer to realize:
an image acquisition function of acquiring a camera image captured of a movable unit (20) of the robot, the movable unit (20) being changeable in position and orientation;
a control information acquisition function of acquiring information of position and orientation of the movable unit (20) in a robot coordinate system recognized by a motion control unit that controls motion of the movable unit (20);
a matching processing function of acquiring a shape model (30) of the movable unit (20) and detecting, based on matching between the camera image and the shape model (30), position and orientation of the movable unit (20) in a camera coordinate system;
a coordinate system calibration function of reconciling the camera coordinate system and the robot coordinate system, based on the position and orientation of the movable unit (20) in the camera coordinate system and the position and orientation of the movable unit (20) in the robot coordinate system, to generates a calibration parameter; and
an output function of outputting the calibration parameter to the motion control unit.
